(19) Europäisches Patentamt
European Patent Office
Office européen des brevets

(11) **EP 4 422 414 B1**

(12) **EUROPÄISCHE PATENTSCHRIFT**

(45) Veröffentlichungstag und Bekanntmachung des Hinweises auf die Patenterteilung:
**21.01.2026  Patentblatt 2026/04**

(21) Anmeldenummer: **22809787.9**

(22) Anmeldetag: **27.10.2022**

(51) Internationale Patentklassifikation (IPC):
*A23J 1/14* (2006.01)     *A23J 3/14* (2006.01)

(52) Gemeinsame Patentklassifikation (CPC):
**A23J 1/14; A23J 3/14**

(86) Internationale Anmeldenummer:
**PCT/EP2022/080096**

(87) Internationale Veröffentlichungsnummer:
**WO 2023/073109 (04.05.2023 Gazette 2023/18)**

(54) **VERFAHREN ZUR GEWINNUNG VON PROTEINEN AUS RAPSPRESSKUCHEN**

METHOD FOR OBTAINING PROTEINS FROM RAPE PRESS CAKE

PROCÉDÉ D'OBTENTION DE PROTÉINES À PARTIR DE TOURTEAU DE COLZA

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität:  **27.10.2021  DE 102021128016**

(43) Veröffentlichungstag der Anmeldung:
**04.09.2024  Patentblatt 2024/36**

(73) Patentinhaber:
• **Brökelmann & Co. Ölmühle GmbH & Co.
59067 Hamm (DE)**

• **Verein zur Förderung des Technologietransfers an der Hochschule Bremerhaven e.V.
27572 Bremerhaven (DE)**

(72) Erfinder: **SCHÜRING, Martin
27572 Bremerhaven (DE)**

(74) Vertreter: **Fritz Patent- und Rechtsanwälte PartmbB
Apothekerstr. 55
59755 Arnsberg (DE)**

(56) Entgegenhaltungen:
EP-B1- 1 389 921     DE-B4- 102016 115 911
US-A1- 2007 004 908     US-A1- 2021 177 005

**Beschreibung**

Die vorliegende Erfindung betrifft ein Verfahren zur Gewinnung von Proteinen aus Rapspresskuchen, umfassend die nachfolgend genannten Schritte:

- Abtrennen von Schalenanteilen aus dem Rapspresskuchen;
- Suspendieren der gereinigten Fraktion nach Abtrennung der Schalenanteile in einer wässrigen Lösung;
- Durchmischen dieser ersten Suspension bei erhöhter Temperatur von wenigstens 31 °C, um Proteine in Lösung zu bringen;
- Abkühlen der Proteinlösung bzw. der Suspension auf eine Temperatur von weniger als 5 °C unter Ausfällung eines ersten proteinreichen Sediments und
- Abtrennen des ersten proteinreichen Sediments.

Raps ist eine Pflanzenart aus der Familie der Kreuzblütengewächse und zählt auf Grund seines hohen Ölgehalts zu den Weichsaaten. Im Vergleich zu Cerealien ist Rapssaat nahezu frei von Endospermgewebe, die Nährstoffe werden strukturiert in den Zellen gespeichert. Für die Extraktion von Proteinen mit Wasser sind die amphiphilen Eigenschaften der Proteine sowie deren Löslichkeit von Bedeutung. Das Öl des Raps ist vor allem in Oleosomen gespeichert. Die Membran der Oleosome bildet Proteine. Je kleiner der durchschnittliche Oleosomdurchmesser, desto höher ist die Membranoberfläche und damit der Proteingehalt im Raps. Diese Speicherproteine machen 90 % des Gesamtproteingehalts des Raps aus und können in drei Hauptarten unterteilt werden:

- 40 % Globuline
- 40 % Albumine
- 10 % Oleosin

Bei den zu extrahierenden Proteinen handelt es sich somit hauptsächlich um Globuline und Albumine.
Die im Raps enthaltenen Proteine besitzen aufgrund unterschiedlicher Strukturen verschiedene Löslichkeit. Es handelt sich vor allem um das 12S-Globulin Cruciferin und das 2S-Albumin Napin. Die Löslichkeit von Cruciferin in Wasser ist vor allem abhängig vom pH-Wert der Lösung. Der IEP (isoelektrische Punkt) liegt bei ca. 4,5. Mit steigendem pH-Wert, ausgehend vom IEP, steigt auch die Löslichkeit. Bei einem pH-Wert von 4,5 befindet sich Cruciferin an seinem isoelektrischen Punkt, ist daher unpolar und somit in Wasser schlecht löslich, während im alkalischen Bereich die Löslichkeit zunimmt.
Die Rapsölgewinnung in Ölmühlen erfolgt entweder durch Heißpressung und Extraktion oder durch Kaltpressung. Nach der Pressung, bei der das Rapsöl nicht vollständig, aber zum größten Teil gewonnen wird, verbleibt eine protein- und energiereiche Rapssaatmasse mit einem Restölgehalt von beispielsweise etwa 10 Gew.-% bis etwa 20 Gew.-%. Diese Rapssaatmasse wird bei der Heißpressung und Extraktion als "Rapsextraktionsschrot" oder Rapsmehl (im englischen auch "rapeseed meal" oder canola meal") bezeichnet. Das bei der Kaltpressung verbleibende Restprodukt wird als "Rapspresskuchen" bezeichnet.
Rapssaat besteht aus einem Rapskern (Kotyledon) und schwarzen Schalen, die bei manchen Verfahren zunächst entfernt werden. Wird nur der nach der Entfernung der Schalen verbleibende Kern gepresst, erhält man bei Kaltpressung ein Rapskernöl. In der Regel wird jedoch bei der Kaltpressung zur Ölgewinnung die vollständige oder teilweise geschälte Rapssaat gepresst, so dass der dann erhaltene Rapspresskuchen noch die Schalen enthält.
Hinsichtlich der Ausgangsprodukte für die Gewinnung von Rapsproteinen muss man demnach unterscheiden zwischen Rapsextraktionsschrot und Rapspresskuchen, deren Zusammensetzung und Eigenschaften sich wesentlich unterscheiden. Rapsextraktionsschrot, welcher bei der Extraktion von Rapssaat mit Lösungsmitteln anfällt, enthält üblicherweise maximal etwa 2,5 % Öl, etwa 11,5 % Wasser, beispielsweise etwa 32 % Proteine und etwa 13 % Rohfaser. Bei der Gewinnung von Rapsöl durch Extraktion werden in der Regel zunächst die Schalen entfernt. Bei der Extraktion werden Lösungsmittel wie beispielsweise Hexan verwendet und es wird bei höheren Temperaturen gearbeitet. Aus diesem Grund und wegen der anschließenden Toastung zur Austreibung des Lösungsmittels sind die Proteinanteile im Rapsextraktionsschrot denaturiert und daher für die menschliche Ernährung weniger wertvoll.
Rapspresskuchen ist hingegen der bei der Kaltpressung oder gegebenenfalls auch der Heißpressung von Rapsöl als Nebenprodukt anfallende feste Pressrückstand. Rapspresskuchen hat einen wesentlichen höheren Ölgehalt als Rapsextraktionsschrot von beispielsweise etwa 10 % bis etwa 20 %, beispielsweise von etwa 15 %, je nach Pressung. Der Proteingehalt des Rapspresskuchens liegt bei ca. 26 % bis 38 %, beispielsweise bei etwa 33 %, der Fasergehalt liegt bei etwa 7,8 % bis 13 %, beispielsweise bei etwa 9 % und der Wassergehalt bei 5 % bis 12 %, beispielsweise bei etwa 8 %. Rapspresskuchen unterscheidet sich weiterhin von Rapsextraktionsschrot durch den enthaltenen Schalenanteil. Außerdem fällt der Rapspresskuchen nach der Kaltpressung stückig oder brockig an und zur Gewinnung von Proteinanteilen ist zunächst eine Zerkleinerung des Rapspresskuchens erforderlich, die allerdings beispielsweise auch durch Nasszerkleinerung in der Suspension erfolgen kann.

Die DE 10 2016 115 911 B4 beschreibt ein Verfahren, bei dem gemäß einer Variante von einem Stoffgemenge aus bereits entölter Rapssaat (Presskuchen) ausgegangen wird, dieser Presskuchen zerkleinert wird, das zerkleinerte Stoffgemenge dispergiert wird und der pH-Wert des Breis durch Zugabe von Lauge in einen alkalischen Bereich mit einem pH-Wert von mehr als 9,5 eingestellt wird. Anschließend wird Ethanol als wasserlösliches organisches Lösungsmittel zugegeben, um die Schalen von dem Kotyledon zu trennen. Die Feststoffphase, die die Schalen enthält, wird abgetrennt, der pH-Wert wird mit Hilfe von verdünnter Salzsäure ins Saure verschoben und das dann erhaltene mehrphasige Gemisch wird in einem Dekanter getrennt, wobei eine Polyphenol-Albumin-Flüssigkeitsphase erhalten wird, der das Enzym Laccase zugegeben wird. Durch das Enzym wird die wässrige sinapinsäurehaltige Phase zur Reaktion gebracht. Neben der wässrigen Sinapinsäure-Phase wird bei der Ansäuerung ein Proteinquark ausgefällt, der abgetrennt werden und somit bei diesem bekannten Verfahren quasi als Nebenprodukt gewonnen werden kann. Diese Schrift enthält keine Hinweise auf unterschiedliche Löslichkeiten der Proteine bei unterschiedlichen Temperaturen.

Die WO 2019/048695 A1 beschreibt ein Verfahren zur Gewinnung von Protein aus Rapsölsaat oder anderen Ölsaaten, bei dem die Rapssamen zunächst geschält werden, so dass nur ein vergleichsweise geringer Gehalt an Schalen und somit ein geringer Faseranteil verbleibt. Die geschälten Rapssamen werden dann durch Pressen mechanisch entölt und auch im Presskuchen gebundenes Wasser wird weitgehend abgetrennt bis auf einen Wassergehalt unter 2 %. Anschließend erfolgt eine Extraktion mit einem organischen Lösungsmittel wie Methanol, Ethanol, Propanol, Hexan oder überkritischem $CO_2$. Bei diesem bekannten Verfahren erfolgt der Pressvorgang bei einer Temperatur von 70 °C, die daran anschließende Trocknung erfolgt im Vakuum bei 80 °C und danach erfolgt die Extraktion mit dem organischen Lösungsmittel bei ebenfalls vergleichsweise hohen Temperaturen von 60 °C.

In der US 9,040,098 B2 wird die Gewinnung eines löslichen Rapsproteinisolats beschrieben, wobei man zu einem Rapsmehl eine wässrige Natriumchlorid-Lösung gibt und das Gemisch bei Raumtemperatur rührt. Der unlösliche Anteil des Rapsmehls wird entfernt und die erhaltene Proteinlösung wird zentrifugiert, zur Klärung gefiltert, über eine Membran konzentriert und dann bei 60 °C pasteurisiert. Danach wird die konzentrierte Lösung mit Calciumchlorid versetzt und dadurch ausgefallene Stoffe werden durch Zentrifugieren abgetrennt. Bei diesem bekannten Verfahren wird stets mit dem Retentat weitergearbeitet, das heißt mit denjenigen Proteinen, die bei Verwendung einer wässrigen Kochsalzlösung bei Raumtemperatur in Lösung gehen. Als Ausgangsmaterial wird ein "Rapsmehl" verwendet, so dass anzunehmen ist, dass es sich um ein Rapsextraktionsschrot gemäß obiger Beschreibung handelt. Außerdem ist bei diesem bekannten Verfahren ein Schritt vorgesehen, bei dem die konzentrierte Rapsproteinlösung mit Salzsäure auf einen pH-Wert von 2,5 bis 4 angesäuert wird.

Die EP 1 389 921 B1 offenbart ebenfalls ein Verfahren zur Gewinnung von Proteinen aus einem Rapsmehl, bei dem dieses mittels einer NaCl-Lösung bei Raumtemperatur gelöst wird, wobei eine wässrige Proteinlösung erhalten wird. Nach Abtrennung des restlichen Rapsmehls und Klärung der Lösung durch Zentrifugieren sowie die Zugabe von Aktivkohle wird die Proteinextraktlösung mit Hilfe einer Ultrafiltration konzentriert. Die konzentrierte Lösung wird dann mit 4 °C kaltem Wasser verdünnt, wobei sich ein Niederschlag in Form einer weißen Wolke bildet. Die nach Entfernen des Wassers erhaltene viskose, klebrige Masse wird dann ohne weitere Behandlung getrocknet.

Die US2007/0004909 A1 offenbart die Extraktion von Rapsproteinen aus Raps-Samen-Schrot-Öl mit einer wässrigen Salzlösung, Hitzebehandlung der abgetrennten Rapsproteinlösung und Ausfällen der Proteine.

Die vorgenannten Schriften zeigen, dass aus dem Stand der Technik sowohl Verfahren zur Gewinnung von Proteinen aus Rapsölsaat bekannt sind, bei denen von Rapsmehl (Rapsextraktionsschrot) ausgegangen wird, als auch solche, bei denen man versucht, Proteine aus dem durch Kaltpressung erhaltenen Rapspresskuchen zu gewinnen. Jedoch werden dabei häufig organische Lösungsmittel eingesetzt, um die Proteine in Lösung zu bringen und/oder der pH-Wert der Proteinlösung wird durch Zugabe von Lauge oder Säure eingestellt. Beim Einsatz von Lauge ist es von Nachteil, dass man anschließend wieder Säure hinzufügen muss, um den pH-Wert in einen etwa neutralen Bereich zu bringen. Bei anderen Verfahren werden Salze wie NaCl oder $CaCl_2$ zugesetzt, um die Löslichkeit der Proteine zu erhöhen oder bestimmte Stoffe abzutrennen, wodurch es notwendig wird, die Salze anschließend durch Waschvorgänge oder dergleichen wieder zu entfernen.

Einige der bekannten Verfahren umfassen viele Trennschritte und sind daher komplex oder sie verwenden vergleichsweise kostenaufwändige Trennschritte wie beispielsweise Ultrafiltrationen. Bei dem aus der EP 1 389 921 B1 bekannten Verfahren erfolgt der Vorgang des Lösens von Proteinen aus Rapsmehl durch Rühren bei Raumtemperatur unter Zusatz von Kochsalz. Es wurde im Rahmen von Untersuchungen im Zusammenhang mit der vorliegenden Erfindung festgestellt, dass bei Raumtemperatur (ca. 20 °C) nur ein Teil der Proteine in Lösung geht, da die Proteinlöslichkeit mit der Temperatur zunimmt. Andererseits sind zu hohe Temperaturen, die beim Lösevorgang oder anderen Schritten zur Behandlung der Rapssaat angewandt werden, ebenfalls kontraproduktiv, da sie zu einer Denaturierung der Proteine führen.

Ausgehend von den vorgenannten Nachteilen des vorbekannten Standes der Technik besteht die Aufgabe der vorliegenden Erfindung darin, ein Verfahren zur Gewinnung von Proteinen aus Rapspresskuchen mit den eingangs genannten Merkmalen zur Verfügung zu stellen, welches weniger aufwändig ist, ohne den Einsatz organischer Lösungsmittel und Säuren, Laugen oder Salze auskommt, bei dem mit für die Proteine schonenden Methoden gearbeitet wird und welches gleichwohl die Gewinnung eines vergleichsweise hohen Anteils der im Rapspresskuchen enthaltenen Proteine ermöglicht.

Die Lösung der vorgenannten Aufgabe liefert ein Verfahren zur Gewinnung von Proteinen aus Rapspresskuchen mit den Merkmalen des Anspruchs 1.

Erfindungsgemäß ist ein Verfahren mit den eingangs genannten Merkmalen vorgesehen, bei dem das nach dem Abtrennen erhaltene erste proteinhaltigen Sediment anschließend erneut mit Wasser versetzt wird, zur Herstellung einer weiteren Suspension, die weitere Suspension abgekühlt wird auf eine Temperatur von weniger als 5 °C und das dabei erhaltene zweite proteinreiche Sediment abgetrennt wird. Das erfindungsgemäße Verfahren hat die folgenden Vorteile: Zum einen sieht es vor, die Proteine ohne das Zusetzen organischer Lösungsmittel in Lösung zu bringen. Es wird eine wässrige Suspension der gereinigten Fraktion nach Abtrennung der Schalenanteile hergestellt, wobei allerdings das Suspendieren und Durchmischen der Suspension bei einer höheren Temperatur erfolgt als im Stand der Technik, vorzugsweise bei einer Temperatur von wenigstens etwa 31 °C. Aufgrund dieser höheren Temperatur geht bei Verwendung eines wässrigen Mediums als Lösungsmittel ein größerer Anteil der Proteine in Lösung.

Da gemäß der Erfindung auf die Verwendung von Salzen beim Vorgang des Dispergierens des Rapspresskuchens und Lösen von Proteinanteilen verzichtet wird, gestaltet sich das Verfahren insgesamt einfacher, da auf die Entfernung von Salzen verzichtet werden kann und somit weitere nachfolgende Reinigungsschritte entfallen können.

Ebenso wird auf den Einsatz von Laugen in dem Schritt des Dispergierens des Rapspresskuchens nach Möglichkeit verzichtet und gemäß der Erfindung wird hier vorzugsweise bei einem nativen pH-Wert gearbeitet. Mit "nativem" pH-Wert ist derjenige pH-Wert gemeint, der sich ergibt, wenn man den Rapspresskuchen in Wasser dispergiert, ohne eine Lauge oder ein anderes basisches Medium zuzugeben. Der pH-Wert liegt somit erfindungsgemäß annähernd im neutralen Bereich. Dies hat zum einen den Vorteil, dass eine schonende Behandlung der im Rapspresskuchen enthaltenen Proteine gegeben ist und Denaturierungen durch alkalisches Medium vermieden werden. Zum anderen ist es von Vorteil, dass keine spätere Neutralisierung des alkalischen Mediums notwendig ist, sodass eine Zugabe von Säuren vermieden wird und dadurch wiederum das gesamte Verfahren vereinfacht wird.

Das erfindungsgemäße Verfahren fußt weiterhin auf der Erkenntnis, dass die Löslichkeit der im Rapspresskuchen enthaltenen Proteine in wässriger Lösung von der Temperatur des Wassers abhängt. Der Löslichkeitsunterschied vergrößert sich dabei mit der Temperaturspreizung. Wenn beispielsweise der Rapspresskuchen mit Wasser bei einer Temperatur von ca. 31 °C dispergiert wird und das wässrige Medium, in dem sich ein Anteil der Proteine gelöst hat, in einem nachfolgenden Schritt auf eine Temperatur von beispielsweise 4 °C gebracht wird, dann ergibt sich bereits eine Temperaturspreizung von 27 °C. Wenn man alternativ beim Dispergieren des Rapspresskuchens beispielsweise bei einer Temperatur von 38 °C arbeitet und die proteinhaltige Lösung in einem nachfolgenden Schritt beispielsweise auf 1 °C abkühlt, dann beträgt die Temperaturspreizung bereits 37 °C. Derartige Temperaturunterschiede lassen sich nicht annähernd erreichen, wenn man beim Dispergieren des Rapspresskuchens bei Raumtemperatur arbeitet, wie dies bei aus dem Stand der Technik bekannten Verfahren der Fall ist, denn in diesem Fall wäre eine maximale Temperaturspreizung von nur etwa 20 °C möglich, da man bei der Ausfällung der Proteine die Temperatur nicht unter den Gefrierpunkt absenken kann. Dennoch vermeidet man bei der erfindungsgemäßen Vorgehensweise zu hohe Temperaturen beim in Lösung bringen der Proteine von beispielsweise 60 °C oder darüber, denn dabei bestünde die Gefahr, dass die enthaltenen Proteine zumindest teilweise denaturieren und dadurch das Zielprodukt des Verfahrens weniger werthaltig ist.

Durch das starke Abkühlen der proteinreichen Lösung durch Absenken der Temperatur auf weniger als 5 °C erreicht man gemäß der Erfindung die Ausfällung von Proteinen. Diese im Rahmen der Erfindung als "erstes proteinreiches Sediment" bezeichnete Proteinmasse wird in wenigstens einem nachfolgenden Schritt erneut mit Wasser versetzt, zur Herstellung einer weiteren Suspension, die weitere Suspension wird abgekühlt auf eine Temperatur von weniger als 5 °C und das dabei erhaltene zweite proteinreiche Sediment wird dann abgetrennt. Diese erfindungsgemäße Vorgehensweise hat den Vorteil, dass ein Wascheffekt eintritt, da Stoffe, die bei diesen Bedingungen in Lösung gehen und in Lösung bleiben, bei der nachfolgenden Trennung abgetrennt und entfernt werden können. Dies können beispielsweise Inhaltsstoffe des Rapspresskuchens sein, die die sensorischen Eigenschaften des proteinhaltigen Zielprodukts, welches beispielsweise für eine Verwendung in Nahrungsmitteln oder Futtermitteln vorgesehen ist, negativ beeinflussen. Durch das Herauslösen unerwünschter Stoffe aus dem Sediment bei diesem Waschvorgang erhöht sich der relative Anteil an Proteinen im Sediment.

Vorteilhaft ist dabei weiterhin, dass es sich bei der vorgenannten Maßnahme um einen vergleichsweise einfachen Verfahrensschritt handelt, welcher keinen erhöhten apparativen Aufwand erfordert, wie beispielsweise eine Ultrafiltration, die im Stand der Technik angewandt wird. Somit ist das erfindungsgemäße Verfahren bekannten Methoden überlegen, es ist erheblich kostengünstiger und daher vorteilhaft, insbesondere wenn eine Gewinnung von Rapspresskuchen im industriellen Maßstab in großen Mengen vorgesehen ist.

Somit stellt die vorliegende Erfindung ein Verfahren zur Verfügung, welches mit geringerem apparativen Aufwand als bisherige Methoden auf schonendem Wege die Gewinnung eines vergleichsweise hohen Anteils der im Rapspresskuchen enthaltenen Proteine ermöglicht.

Es wurde eingangs bereits erwähnt, dass Rapspresskuchen im Gegensatz zu Rapsextraktionsschrot in der Regel zunächst noch einen Schalenanteil enthält, da die Rapssaat bei der Kaltpressung zur Gewinnung des Rapsöls mit den Schalen gepresst wird. Geht man von Rapspresskuchen aus der Kaltpressung aus, gibt es bei dem Verfahren gemäß der vorliegenden Erfindung im Prinzip zwei alternative Varianten zur Entfernung der Schalenanteile aus dem Rapspresskuchen. Man kann entweder eine Abtrennung der Schalen im trockenen Verfahren vornehmen, so dass die Schalen abgetrennt werden, bevor der Rapspresskuchen mit Wasser dispergiert wird. Oder es wird zunächst der Rapspresskuchen in Wasser dispergiert und dann werden die Schalen aus dieser Dispersion entfernt, das heißt es handelt sich hier im Prinzip um eine Nassabtrennung. Bei dieser Variante der Nassabtrennung kann gemäß einer bevorzugten Weiterbildung der Erfindung beispielsweise das Abtrennen von Schalenanteilen aus der Suspension durch Filtration oder Dekantieren erfolgen, zum Beispiel mit Hilfe von Vibrationssieben, Rotationsfiltern, einer Filterpresse oder dergleichen - gegebenenfalls im mehreren Stufen und mit kombinierten Trennsystemen. Dabei erhält man dann einen schalenreichen Filterkuchen, den man optional erneut mit Wasser dispergieren kann, um aus der dann erhaltenen Suspension weitere Proteine zu gewinnen. Nach der Abtrennung des Filterkuchens verbleibt eine proteinreiche Flüssigkeit, in der alle Proteine enthalten sind, die unter den Bedingungen des Suspendierens mit Wasser bei der gegebenen Temperatur von mindestens 31 °C in Lösung gehen. Diese proteinreiche Flüssigkeit wird dann im nächsten Schritt abgekühlt, um Proteine auszufällen.

Bei der alternativen Trockenabtrennung der Schalen erfolgt zunächst eine Zerkleinerung des Rapspress-chens, beispielsweise durch einen Mahlvorgang. Hier kommen verschiedene Mahlmethoden in Betracht, beispielsweise kann die Vermahlung mittels Prall-, Stift-, Schlagkreuzmühlen, Walzen oder ähnlichen Vorrichtungen erfolgen. Diese Zerkleinerung ist erforderlich, da der Rapspresskuchen nach dem Pressvorgang in der Regel in größeren Stücken oder Brocken vorliegt. Nach dem Zerkleinern können die Schalen beispielsweise durch einen Siebvorgang und/oder durch Windsichten abgetrennt werden. Das Windsichten ist ein mechanisches Trennverfahren, bei dem Partikel anhand ihres Verhältnisses von Trägheits- oder Schwerkraft zum Strömungswiderstand in einem Gasstrom getrennt werden. Die leichteren Schalen bewegen sich beim Windsichten bei einer vertikalen Trennung nach oben, während die Körner, bei denen die Schwerkraft größer ist als der Strömungswiderstand, sich nach unten absetzen. Beim Sieben erfolgt die Trennung über die Partikelgröße.

Nach der Abtrennung der beim Rapskorn dunklen Schalen im Trockenverfahren verbleibt eine hellere Fraktion, die den Kern der Rapssaat (das Kotyledon) enthält sowie gegebenenfalls noch Reste der Schalen. Diese hellere Fraktion des Rapspresskuchens wird dann bei dem erfindungsgemäßen Verfahren in Wasser suspendiert und durchmischt, um die Proteinanteile in Lösung zu bringen. Bei der Trockenabtrennung werden somit zunächst die Schalen abgetrennt und dann wird die schalenfreie Fraktion in Wasser suspendiert, während bei der oben beschriebenen Nassabtrennung erst der zerkleinerte Rapspresskuchen in Wasser suspendiert wird und danach die Schalen aus der Suspension entfernt werden. Vorteilhaft bei der Nassabtrennung ist die Tatsache, dass der gesamte Rapspresskuchen der Suspension unterzogen wird, wodurch man vermeidet, dass bei einer mechanischen trockenen Abtrennung der Schalen beispielsweise an den Schalen anhaftende Anteile des Rapskerns und somit ein Teil der zu gewinnenden Proteine verloren geht.

Gemäß einer bevorzugten Weiterbildung der vorliegenden Erfindung erfolgt das Suspendieren der gereinigten Fraktion mit einer salzfreien wässrigen Lösung. Dies hat den Vorteil, dass die bei diesem Schritt erhaltene Lösung von Proteinen salzfrei ist, so dass es sich erübrigt, in einem späteren Schritt die gelösten Salze wieder zu entfernen. Außerdem kann es vorteilhaft sein, wenn man auf diese Weise eine Wechselwirkung der verwendeten Salze mit in der Lösung enthaltenen Proteinen vermeidet.

Um Proteinanteile aus dem zerkleinerten Presskuchen in Lösung zu bringen, dispergiert man erfindungsgemäß mit Wasser bei einer Temperatur von wenigstens etwa 31 °C. Man kann dabei entweder den Rapspresskuchen mit warmem Wasser versetzen oder gegebenenfalls auch mit kaltem Wasser, wobei man die erhaltene Dispersion dann auf die vorgesehene Temperatur erwärmt. Die erhaltene Dispersion wird dabei gerührt oder anderweitig gut durchmischt, um Proteine in Lösung zu bringen. Gemäß einer bevorzugten Weiterbildung der Erfindung erfolgt das Dispergieren bzw. das Durchmischen der ersten Suspension bei einer Temperatur im Bereich von etwa 31 °C bis etwa 55 °C, insbesondere bei einer Temperatur zwischen etwa 35 °C und etwa 50 °C, besonders bevorzugt bei einer Temperatur im Bereich von etwa 35 °C und etwa 45 °C.

Durch die zuvor beschriebene Erwärmung der wässrigen Suspension wird angestrebt, einen möglichst hohen Anteil der in dem zerkleinerten Presskuchen enthaltenen Proteine in Lösung zu bringen. Im nächsten Schritt wird diese Suspension dann abgekühlt, vorzugsweise auf eine Temperatur im Bereich von etwa 4 °C bis etwa 0 °C. Bei der Abkühlung kann die Temperatur bis nahe an den Gefrierpunkt gebracht werden, wobei man natürlich darauf achten muss, dass die wässrige Lösung nicht friert, da dann die anschließend vorgesehene Abtrennung beeinträchtigt wird. Bei der Abkühlung bildet sich ein Niederschlag, wobei davon ausgegangen wird, dass die zunächst gelösten Proteine bei der tiefen Temperatur unlöslich werden und dadurch ausfallen. Das erhaltene proteinreiche Sediment kann dann abgetrennt werden.

Dieses nach der Abkühlung der Dispersion ausgefallene Sediment wird in der vorliegenden Anmeldung als "erstes proteinreiches Sediment" bezeichnet. Gemäß der Erfindung wird das abgetrennte erste proteinreiche Sediment anschließend erneut mit Wasser versetzt, zur Herstellung einer weiteren Suspension, dann wird diese weitere Suspension abgekühlt auf eine Temperatur von weniger als 5 °C und das dabei erhaltene zweite proteinreiche Sediment kann wiederum abgetrennt werden.

Gemäß einer bevorzugten Weiterbildung der Erfindung erfolgt das Abtrennen des ersten und/oder zweiten proteinreichen Sediments unter Einwirkung eines Zentrifugal- oder auch Schwerkraftfelds. Dies bedeutet, dass man die Abtrennung durch Rotation in einer geeigneten Vorrichtung bewirkt, in der ein solches Zentrifugalfeld erzeugt wird, beispielsweise in einem Dekanter, einem Separator oder einer Zentrifuge.

Gemäß einer bevorzugten Weiterbildung der Erfindung weist die erste Suspension einen nativen pH-Wert im Bereich von wenigstens etwa 6,5 - 6,8 auf. Unter einem nativen pH-Wert wird derjenige pH-Wert verstanden, der sich einstellt, wenn der Rapspresskuchen in Wasser gelöst wird, ohne dass dabei ein Zusatz einer Säure oder Base erfolgt. Der sich dann einstellende pH-Wert hängt somit nur von der Natur des Rapspresskuchens sowie vom pH-Wert des zugegebenen Wassers ab, welcher naturgemäß schwanken kann, insbesondere wenn die Zugabe von Leitungswasser erfolgt, welches je nach Region einen pH-Wert innerhalb eines gewissen Schwankungsbereichs aufweisen kann. Gemäß einer möglichen alternativen Variante des Verfahrens kann aber auch gegebenenfalls eine Zugabe eines alkalischen Mediums vorgesehen sein, mittels dessen die Dispersion auf einen neutralen oder schwach alkalischen pH-Wert im Bereich von etwa 6,5 bis etwa 9 gebracht wird.

Gemäß der vorliegenden Erfindung wird durch das Ausfällen und Abtrennen des ersten proteinreichen Sediments eine Lösung erhalten, die hierin als "proteinarmer Überstand" bezeichnet wird. Gemäß einer möglichen bevorzugten Variante des erfindungsgemäßen Verfahrens ist es möglich, diesen proteinarmen Überstand, der auch die sonstigen beim Dispergieren in Wasser löslichen Substanzen enthält, welche bei der starken Abkühlung auf weniger als 5 °C nicht ausfallen, nach dem Abtrennen des ersten proteinreichen Sediments weiter aufzuarbeiten. Beispielsweise ist es denkbar, dass man aus diesem proteinarmen Überstand weitere werthaltige Substanzen gewinnt, die im Rapspresskuchen enthalten sind. Zum Beispiel kommen hier Glucosinolate, Sinapinsäure, eine Phenolsäure, die in der Rapssaat in größeren Mengen enthalten ist, oder Phytinsäure, ein in der Rapssaat enthaltener Phosphorsäureester, in Betracht. Ebenso ist es denkbar, bei der Aufarbeitung weitere Proteine aus dem Überstand zu gewinnen, welche bei der starken Abkühlung nicht ausfallen, sondern weiterhin in dem Überstand gelöst bleiben.

Schließlich ist es auch in manchen Fällen sinnvoll, den proteinarmen Überstand in geeigneter Form zu reinigen, um beispielsweise belastende Substanzen zu entfernen, bevor man den Überstand in das Abwasser abführt, um eine Belastung des Abwassers mit diesen Substanzen zu vermeiden.

Die gleichen Verfahrensschritte wie sie oben für den proteinarmen Überstand nach dem Abtrennen des ersten proteinreichen Sediments aufgezählt sind, können optional auch mit dem proteinarmen Überstand des zweiten proteinreichen Sediments durchgeführt werden. Bei dem erneuten Suspendieren des ersten proteinreichen Sediments mit Wasser gehen wiederum Substanzen in Lösung, die zumindest teilweise auch nach der Abkühlung und dem Abtrennen des zweiten proteinreichen Sediments in dem proteinarmen Überstand gelöst bleiben. Dieser zweite Überstand kann auf die gleiche Weise aufgearbeitet werden wie der erste proteinarme Überstand nach dem Abtrennen des ersten proteinreichen Sediments, wobei es verfahrenstechnisch sinnvoll sein kann, den zweiten Überstand mit dem ersten Überstand zu vereinen und danach diese Lösungen gemeinsam aufzuarbeiten.

Gemäß einer bevorzugten Weiterbildung des erfindungsgemäßen Verfahrens können die Bedingungen bei der Herstellung einer weiteren Suspension durch Zugabe von Wasser zu dem ersten proteinreichen Sediment im Vergleich zu den Bedingungen beim ersten Suspendieren des Rapspresskuchens in einer wässrigen Lösung variiert werden, insbesondere hinsichtlich der Zusammensetzung oder des pH-Werts oder der Temperatur des wässrigen Mediums, welches für das Suspendieren verwendet wird und/oder es können die Bedingungen beim Abkühlen der weiteren Suspension im Vergleich zu den Bedingungen beim Abkühlen der ersten Proteinlösung variiert werden, insbesondere hinsichtlich der Temperatur, auf die die jeweilige Suspension abgekühlt wird. Auf diese Weise ist es zum Beispiel möglich, bei der Herstellung der weiteren Suspension andere Anteile des Rapspresskuchens in Lösung zu bringen als beim ersten Suspendieren oder bei der anschließenden Ausfällung durch Abkühlung andere Proteine auszufällen als bei der ersten Ausfällung durch Abkühlung.

Gemäß einer bevorzugten Weiterbildung des erfindungsgemäßen Verfahrens kann man das bei der weiteren Suspension erhaltene zweite proteinreiche Sediment erneut mit Wasser versetzen zur Herstellung einer weiteren Suspension, die man dann erneut auf eine tiefe Temperatur im Bereich von weniger als 5 °C abkühlt, so dass sich ein weiter gereinigtes proteinreiches Sediment ergibt und nach dessen Abtrennung ein weiterer proteinarmer Überstand. Gegebenenfalls kann man den Zyklus dieser Schritte auch zwei- oder mehrfach wiederholen, um so das Protein weiter zu reinigen und den relativen Anteil an Protein im Sediment weiter zu erhöhen und die Gesamtausbeute in dem Verfahren zu verbessern. Es ist beispielsweise auch möglich, in diesen weiteren Verfahrenszyklen die Bedingungen bei der Herstellung der wässrigen Suspension, beispielsweise den pH-Wert und/oder die Bedingungen bei der Ausfällung des proteinreichen Sediments durch Abkühlung, beispielsweise die Temperatur, bei der ausgefällt wird, zu variieren, um so weitere Proteinanteile, die im Ausgangsprodukt enthalten sind, zu gewinnen.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Dabei zeigen:

Figur 1 eine schematische Darstellung einer beispielhaften ersten Variante zur Aufbereitung des Rapspresskuchens nach dem erfindungsgemäßen Verfahren, bei der die Schalen in einem trockenen Verfahren abgetrennt werden;

Figur 2 eine schematische Darstellung einer zweiten Variante zur Aufbereitung des Rapspresskuchens nach dem erfindungsgemäßen Verfahren, bei der die Schalenabtrennung nach dem Suspendieren des Rapspresskuchens mit Wasser erfolgt; und

Figur 3 eine schematische Darstellung der Proteinextraktion aus dem aufbereiteten Rapspresskuchen nach dem erfindungsgemäßen Verfahren.

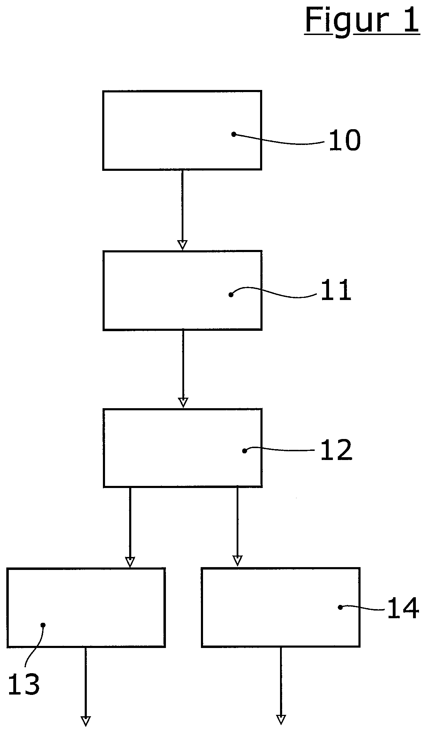

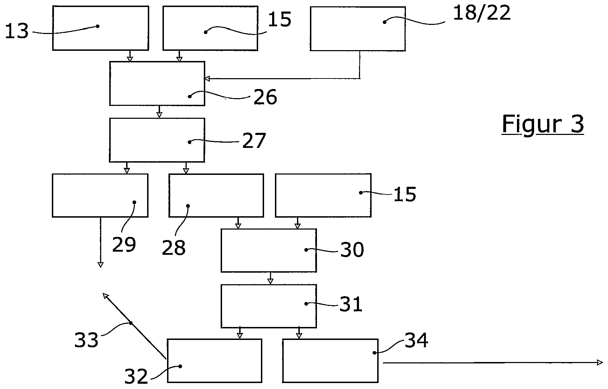

Nachfolgend wird zunächst auf das Verfahrensschema von Figur 1 Bezug genommen und anhand dieser Darstellung wird eine erste mögliche Variante zur Aufbereitung des Rapspresskuchens nach dem erfindungsgemäßen Verfahren näher erläutert. Es wird bei dieser trockenen Variante des Verfahrens von einem Rapspresskuchen 10 aus der Kaltpressung von Raps ausgegangen, welcher mit Hilfe einer Prallmühle zerkleinert wird bis zu einer Partikelgröße im Bereich von beispielsweise etwa 200 $\mu$m bis etwa 1500 $\mu$m, vorzugsweise im Bereich von etwa 500 $\mu$m bis etwa 1200 $\mu$m. Aus diesem zerkleinerten Material 11 des Rapspresskuchens werden anschließend durch Windsichten 12 die dunklen Schalen der Rapssaat abgetrennt, wodurch sich zwei getrennte Fraktionen ergeben, nämlich eine innere helle Fraktion 13 und die abgetrennten Schalen 14. Die weitere Behandlung der schalenfreien hellen Fraktion 13 erfolgt dann nach dem Verfahrensschema gemäß Figur 3 wird dort näher erläutert.

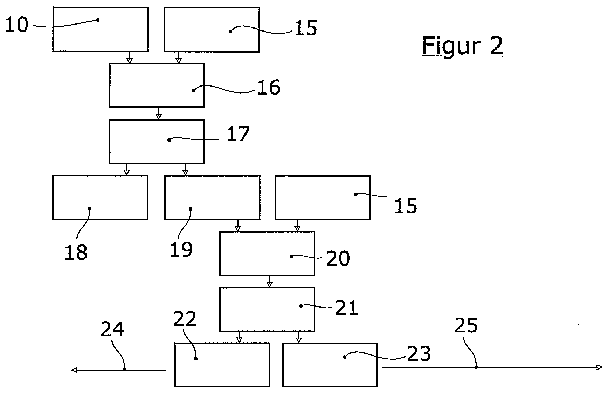

Nachfolgend wird zunächst auf das Verfahrensschema von Figur 2 Bezug genommen und anhand dessen die Aufbereitung des Rapspresskuchens nach dem erfindungsgemäßen Verfahren näher erläutert. Es wird bei dieser Variante des Verfahrens von einem Rapspresskuchen 10 ausgegangen, welcher mit Wasser 15 versetzt wird, zur Herstellung einer Suspension 16 mit einer Konzentration von etwa 5 % in Wasser, die in einem Mischtank gerührt und vermischt wird, bei einer erhöhten Temperatur von beispielsweise etwa 40 °C. Die Suspension 16 hat einen nativen annähernd neutralen pH-Wert von etwa 6,5 bis 6,7. Durch die Erwärmung der Suspension 16 gehen in dem Rapspresskuchen enthaltene Proteine in Lösung. Anschließend erfolgt eine Filtration 17 der Suspension, bei der diese durch eine French Press gepresst wird. Dabei entsteht eine proteinreiche Flüssigkeit 18 sowie ein schalenreicher Filterkuchen. Die Abtrennung der Schalen erfolgt somit bei dieser Verfahrensvariante nicht vorab, sondern erst aus der Suspension des Rapspresskuchens in Wasser.

Der bei der Filtration 17 erhaltene schalenreiche Filterkuchen 19 kann erneut mit Wasser 15 versetzt werden zur Erzeugung einer weiteren Suspension 20 in einem Mischtank, die bei einem pH-Wert von beispielsweise etwa 6,5 und einer Temperatur von beispielsweise etwa 40 °C in der Wärme durchmischt wird. Diese weitere Suspension 20 kann anschließend erneut einer Filtration 21 in einer Filterpresse unterzogen werden, wobei wiederum eine proteinreiche Flüssigkeit 22 erhalten wird sowie ein schalenreicher Filterkuchen 23. Die proteinreiche Flüssigkeit 22 wird gemäß dem Pfeil 24 zur Proteinextraktion geleitet, ebenso wie die proteinreiche Flüssigkeit 18, die bei der ersten Filtration 17 gewonnen wurde. Die weitere Behandlung der proteinreichen Flüssigkeiten wird weiter unten unter Bezugnahme auf die Figur 3 näher erläutert. Der bei der Filtration als Rückstand erhaltene schalenreiche Filterkuchen 23 kann einer weiteren Verwendung gemäß dem Pfeil 25 zugeführt werden, beispielsweise als Tierfutter, wobei man diesem gegebenenfalls weitere Bestandteile aus diesem oder anderen Prozessen wie Rapsextraktionsschrot oder dergleichen zumischt.

Nachfolgend werden unter Bezugnahme auf die Figur 3 die weiteren Schritte gemäß einer beispielhaften Variante des erfindungsgemäßen Verfahren näher erläutert. Dabei wird gemäß dem Verfahrensschema von Figur 3 entweder ausgegangen von der schalenfreien inneren hellen Fraktion 13, die bei der trockenen Abtrennung der Schalen gemäß der Variante von Figur 1 erhalten wurde und die gemäß Figur 3 mit Wasser 15 versetzt wird oder es wird ausgegangen von der proteinreichen Flüssigkeit 18 bzw. 22, die bei der Nass-Abtrennung bei der Verfahrensvariante gemäß Figur 2 erhalten wurde. Die Suspension 26 bzw. die proteinreiche Flüssigkeit wird in einem Mischtank abgekühlt auf eine Temperatur von beispielsweise etwa 0 °C, wobei der pH-Wert dieser Suspension bzw. Lösung durch Zugabe von Säure auf einen Wert von 4,5 eingestellt wird. Durch die Abkühlung um ca. 40 °C kommt es zu einer Ausfällung der in der Suspension bzw. der proteinreichen Flüssigkeit enthaltenen Proteine. Diese sedimentierten Proteine können anschließend in einem Zentrifugalfeld 27, beispielsweise in einer Zentrifuge abgetrennt werden, wobei die Temperatur der Lösung dabei leicht ansteigen kann, beispielsweise auf eine Temperatur im Bereich von etwa 4 - 5 °C.

Bei dieser Separation 27 wird ein proteinreiches Sediment 28 erhalten sowie ein proteinarmer Überstand 29, welcher die übrigen, bei diesen Bedingungen löslichen Substanzen aus der Suspension 26 enthält. Das proteinreiche Sediment 28, welches abgetrennt wurde, kann anschließend mit Wasser 15 versetzt werden, wobei eine weitere Suspension 30 erhalten wird, so dass das proteinreiche Sediment 28 einem Waschvorgang unterzogen wird. Dieses Suspendieren erfolgt ebenfalls bei tiefen Temperaturen von beispielsweise etwa 0 °C, um zu verhindern, dass die zuvor ausgefällten Proteine erneut in Lösung gehen. Der pH-Wert dieser weiteren Suspension 30 liegt vorzugsweise in einem Bereich von etwa 4,5 bis etwa 6,5. Es erfolgt eine erneute Abtrennung 31 beispielsweise in einem Dekanter bei weiterhin tiefer Temperatur und einem pH-Wert in dem genannten Bereich, wobei ausgewaschene Substanzen, die in dem Protein als Zielprodukt unerwünscht sind, sich in einem proteinarmen Überstand 32 befinden, welcher gemäß dem Pfeil 33 in Figur 3 entweder weiter aufgearbeitet werden kann oder aber in das Abwasser abgeleitet werden kann. Das durch den Waschvorgang gereinigte und bei 31 abgetrennte proteinreiche Sediment 34 kann in einem oder mehreren nachfolgenden weiteren Waschzyklen weiter gereinigt werden, wobei jeder dieser Waschzyklen jeweils das Suspendieren mit Wasser 15 bei tiefer Temperatur zur Herstellung einer Suspension 30 und die Abtrennung in einem Zentrifugalfeld 31 umfasst, so dass ein gereinigtes proteinreiches Sediment 34 als Zielprodukt erhalten wird.

Nachfolgend werden anhand von Beispielen die Bedingungen für eine Zerkleinerung und Aufarbeitung zur Proteingewinnung des eingesetzten Rapspresskuchens in einem industriellen Maßstab wiedergegeben.

### Zerkleinerung

Die Aufgabegröße der Ausgangspartikel des zu zerkleinernden Rapspresskuchens betrug 30 mm, das Schüttgewicht betrug 520 g/l, der Feuchtigkeitsgrad lag bei 8,2 %, die Menge des gelieferten Ausgangsprodukts betrug 60 kg. Als Mahlvorrichtung wurde eine Luftwirbelmühle mit einem mit hoher Peripheriegeschwindigkeit drehenden Ultra-Rotor verwendet. Bei diesem Mühlentyp wird durch Drehbewegungen und gleichzeitig hohen Luftdurchsatz die Luft in extrem schnelle Luftwirbel versetzt, die weichen bis mittelharten Materialien werden in einem Luftstrom erfasst, in extreme Turbulenzen versetzt und durch Prallwirkung von Partikel auf Partikel sowie auf Mahlbahn und Werkzeuge an ihren natürlichen Bruchstellen zerkleinert. Der Hauptrotor wies eine Leistung von 11 kW auf und dessen Siebanlage war mit einem Sieb vom Typ E650 mit einer Siebbespannung im Bereich von etwa 200 $\mu$m bis 1500 $\mu$m, vorzugsweise im Bereich von etwa 500 $\mu$m bis etwa 1200 $\mu$m, ausgerüstet. Die Eingangstemperatur der Mühle betrug 25 °C, die Ausgangstemperatur 41 °C. Am Ende des Mahlvorgangs wurden 44,5 kg Feingut und 8,4 kg Grobgut erhalten.

### Aufarbeitung zur Proteingewinnung (erfindungsgemäß)

Nachfolgend wird das erfindungsgemäße Verfahren zur Gewinnung von Proteinen aus Rapspresskuchen anhand eines konkreten Beispiels näher erläutert. Während zuvor ein Beispiel für die Zerkleinerung des Rapspresskuchens im industriellen Maßstab angeführt wurde, erfolgten in dem nachfolgenden Beispiel die Zerkleinerung und die weiteren Versuche im Labormaßstab. Das Ausgangsprodukt war in Klumpen gepresster Rapspresskuchen. Um weitere physikalische Trennmethoden möglich zu machen, mussten die Klumpen zunächst zerkleinert werden. Dazu wurde im vorliegenden Beispiel eine Hammerschlagmühle mit einem Einsatz mit einer Schlitzdicke von 5 mm verwendet. Alternativ wurden auch Versuche durchgeführt, bei denen ein sogenannten Stephan Cutter für die Zerkleinerung benutzt wurde, welcher sich jedoch als weniger effektiv erwies.

3 kg des vorzerkleinerten Rapspresskuchens wurden anschließend in einen Zick-Zack-Windsichter gefüllt. Die schwere Fraktion, die lediglich nach unten durch das Fallrohr gefallen ist, wurde ein zweites Mal über den Trichter in das Fallrohr gegeben. Nach dem zweiten Durchlauf wurde das Schüttgut entnommen und in eine Faktion mit geringerer Dichte und eine Fraktion höherer Dichte getrennt. Die beiden Fraktionen wurden gefriergetrocknet und auf ihren Proteingehalt analysiert. Die Analysen wurden in Doppelbestimmungen durchgeführt. Außerdem wurde die Trennung der dunklen, schwarzen Hüllen vom hellen gelben Mehl optisch beurteilt. Die Fraktion mit geringerer Dichte enthielt den aufbereiteten schalenarmen und proteinreichen Rapspresskuchen, der anschließend weiterverarbeitet wurde. Die Fraktion mit geringerer Dichte war hell, vorrangig gelb, mit kleinen, schwarzen Schalenresten und machte bei der Trennung durch Windsichten in der Regel etwa ein Drittel des Gesamtgewichtes des Rapspresskuchens aus, während das Schüttgut mit höherer Dichte, welches aus dunklen, schwarzen und gröberen Schalenresten bestand, etwa zwei Drittel des Gesamtgewichtes ausmachte.

Der Proteingehalt des gesamten zerkleinerten Rapspresskuchens vor der Trennung durch Windsichten betrug 30,8 %, derjenige der hellen Fraktion mit geringerer Dichte, mit der anschließend weitergearbeitet wurde, betrug 32,2 %. Die nachfolgend in den Tabellen wiedergegebenen Proteinanteile in % wurden wie folgt berechnet:

$$\text{Proteinanteil in \%} = \frac{\text{Protein in g}}{30,8 \text{ g}} \cdot 100$$

Zur Extraktion des aufbereiteten Rapspresskuchens wurde dieser in Wasser suspendiert, wobei eine Versuchsreihe durchgeführt wurde, bei der drei verschiedene Parameter variiert wurden, nämlich zum einen der pH-Wert der für das Suspendieren verwendeten wässrigen Lösung, der einmal nativ gelassen wurde und einmal auf pH 9 im schwach alkalischen Bereich eingestellt wurde. Zweitens wurde die Temperatur der Suspension entweder auf 20,5 °C oder auf 40 °C eingestellt und drittens die jeweilige Konzentration des Rapspresskuchens in der Suspension mit 5 %, 8 % oder 10 % eingestellt. Nach einer Einwirkzeit von jeweils einer Stunde wurde die Lösung in einer French Press gepresst. Durch das Drücken des Filters auf die Probe wurde der flüssige Überstand von dem festen Rückstand getrennt. Die Bedingungen der Einzelversuche sind in der nachfolgenden Tabelle 1 wiedergegeben, wobei jede Probe in Doppelbestimmung angesetzt wurde.

Tabelle 1:

| Probe | pH-Wert | Temperatur | Konzentration RPK |
|---|---|---|---|
| 1 | nativ | 20,5 °C | 5 % |
| 2 | nativ | 20,5 °C | 8 % |
| 3 | nativ | 20,5 °C | 10 % |
| 4 | nativ | 40 °C | 5 % |
| 5 | nativ | 40 °C | 8 % |
| 6 | nativ | 40 °C | 10 % |
| 7 | 9 | 20,5 °C | 5 % |
| 8 | 9 | 20,5 °C | 8 % |
| 9 | 9 | 20,5 °C | 10 % |
| 10 | 9 | 40 °C | 5 % |
| 11 | 9 | 40 °C | 8 % |
| 12 | 9 | 40 °C | 10 % |
| RPK = Rapspresskuchen | | | |

Der flüssige Überstand nach der Pressung der Suspension wie oben beschrieben enthielt diejenigen Proteine, die bei der Extraktion in Lösung gingen. Die erhaltene Lösung wurde danach abgekühlt auf eine Temperatur von 0 °C, um die Proteine aus der Lösung auszufällen und das dabei gebildete Sediment wurde dann bei 0 °C durch zentrifugieren abgetrennt. Bei denjenigen Versuchen, bei denen zuvor der pH-Wert auf 9 eingestellt wurde, wurde der pH-Wert durch Zugabe von 0,1 M Salzsäure auf 4,5 verringert, während bei den Versuchen, bei denen der pH-Wert zuvor nativ eingestellt wurde (pH 6,7) der pH-Wert nativ belassen wurde.

Die Drehzahl der Zentrifuge betrug 3000 Umdrehungen pro Minute, die Dauer der Zentrifugation betrug 10 Minuten. Die g-Zahl (x-fache Erdbeschleunigung) bei der Zentrifugation betrug 1800 g

Die nachfolgende Tabelle 2 zeigt die Ergebnisse für die Pressung der Suspension durch eine French Press wie oben beschrieben, wobei die anschließende Extraktion des Rapspresskuchens erfindungsgemäß bei 40 °C erfolgte. Die Bestimmung der unten angegebenen Proteingehalte erfolgte gemäß Methode L06.00-7 (amtliche Sammlung von Untersuchungsverfahren § 64 LFGB). Der Proteingehalt wird dabei nicht direkt bestimmt, sondern errechnet. Hierfür wird der Gesamtstickstoffgehalt gemessen. Der Stickstoffgehalt wird ermittelt, indem ein Aufschluss nach Kjeldahl vorgenommen wird, um den Stickstoff freizusetzen.

Tabelle 2: (Extraktion bei 40 °C, Fällung der Proteine bei 0 °C)

| Probe | Konz. | pH-Wert | Proteingehalt | Protein pro 100 g RPK in g | Anteil an gewonnenem Protein |
|---|---|---|---|---|---|
| 1 | 5 | 9 | 59,32 % | 13,70 | 44 % |
| 2 | 5 | 9 | 56,41 % | 14,18 | 46 % |
| 3 | 10 | 9 | 54,47 % | 12,25 | 40 % |
| 4 | 10 | 9 | 53,99 % | 12,43 | 40 % |

Die obige Tabelle 2 zeigt bei den Versuchen, in denen der Rapspresskuchen (RPK) in einer Konzentration von 5 % in Wasser suspendiert wurde, ein höherer Anteil an Proteinen in Lösung ging als in den Fällen, in denen die Suspension mit einer höheren Konzentration von 10 % in Wasser angesetzt wurde.

**Vergleichsversuch 1**

Es wurde ein erster Vergleichsversuch durchgeführt, bei dem die Extraktion des Rapspresskuchens nicht erfindungsgemäß bei höherer Temperatur (von z.B. 40 °C) durchgeführt wurde, sondern bei Raumtemperatur. Die Ergebnisse sind in der nachfolgenden Tabelle 3 dargestellt.

Tabelle 3: (Extraktion bei Raumtemperatur, Fällung der Proteine bei 0 °C)

| Probe | Konz. | pH-Wert | Proteingehalt | Protein pro 100 g RPK in g | Anteil an gewonnenem Protein |
|---|---|---|---|---|---|
| 7 | 5 | 9 | 50,16 % | 9,50 | 30 % |
| 8 | 5 | 9 | 48,28 % | 10,48 | 32 % |
| 11 | 10 | 9 | 55,49 % | 6,86 | 22 % |
| 12 | 10 | 9 | 53,15 % | 7,02 | 22 % |

Der Vergleichsversuch 1 und die Tabelle 3 zeigen, dass bei ansonsten gleichbleibenden Bedingungen (gleicher pH-Wert sowie gleiche Konzentrationen beim Suspendieren des Rapspresskuchens wie in Tabelle 2) der Proteingehalt in der Lösung und der Anteil des aus dem Rapspresskuchen gewonnenen Proteins erheblich niedriger sind, wenn die Extraktion bei Raumtemperatur erfolgt. Außerdem ist auch hier bei höherer Konzentration in der Suspension von 10 % der Anteil an gewonnenem Protein wiederum niedriger als bei geringerer Konzentration von 5 %.

**Vergleichsversuch 2**

Es wurde ein zweiter Vergleichsversuch durchgeführt, bei dem die Extraktion des Rapspresskuchens nicht erfindungsgemäß bei höherer Temperatur (von z.B. 40 °C) durchgeführt wurde, sondern bei Raumtemperatur. Außerdem wurde hier auch die Fällung der Proteine bei Raumtemperatur und nicht bei 0 °C vorgenommen. Die Ergebnisse sind in der nachfolgenden Tabelle 4 dargestellt.

Tabelle 4: (Extraktion bei Raumtemperatur, Fällung der Proteine bei Raumtemperatur)

| Probe | Konz. | pH-Wert | Proteingehalt | Protein pro 100 g RPK in g | Anteil an gewonnenem Protein |
|---|---|---|---|---|---|
| 1 | 5 | 9 | 44,26 % | 6,67 | 21 % |
| 2 | 5 | 9 | 44,28 % | 7,21 | 23 % |
| 3 | 10 | 9 | 49,89 % | 5,26 | 17 % |
| 4 | 10 | 9 | 49,15 % | 5,02 | 16 % |

Der Vergleichsversuch 2 und die Tabelle 4 zeigen, dass bei ansonsten gleichbleibenden Bedingungen (gleicher pH-Wert sowie gleiche Konzentrationen beim Suspendieren des Rapspresskuchens wie in Tabelle 2) noch niedrigere Anteile an Protein gewonnen werden. Dies zeigt, dass bei Raumtemperatur weniger Protein ausgefällt werden kann als bei tiefen Temperaturen.

Anhand einer weiteren Versuchsreihe wurde der Effekt der Anzahl der Waschungen des in der vorliegenden Anmeldung als erstes proteinreiches Sediments untersucht. Die Vorgehensweise erfolgte unter erfindungsgemäßen Bedingungen, das heißt es wurde die Extraktion bei 40 °C durchgeführt und die anschließende Ausfällung des ersten proteinreichen Sediments erfolgte bei tiefer Temperatur von 0 °C. Der pH-Wert der Proben wurde zur Extraktion auf 9 eingestellt und die Konzentration bei der Suspendierung des Rapspresskuchens betrug jeweils 5 %. Das erste proteinreiche Sediment wurde jeweils mit Wasser gewaschen und danach erneut bei tiefer Temperatur ausgefällt. Die Ergebnisse sind in der nachfolgenden Tabelle 5 dargestellt. Bei der ersten Probe betrug die Anzahl der Waschungen 1, bei der zweiten Probe waren es zwei Waschungen etc. Aus den Ergebnissen in Tabelle 5 ergibt sich, dass der Proteingehalt des Sediments mit der Anzahl der Waschungen steigt, was darauf zurückzuführen ist, dass der Reinheitsgehalt des Proteins zunimmt, da andere unerwünschte Substanzen bei der Waschung ausgewaschen werden. Andererseits sinkt aber der Anteil an gewonnenem Protein mit jeder Waschung etwas, weil bei der Waschung natürlich auch ein gewisser Anteil an Protein wieder in Lösung geht. Die Tabelle zeigt, dass beispielsweise bei drei weiteren Waschungen der Proteingehalt der gewaschenen und somit gereinigten Probe auf 62,6 % erhöht werden kann.

Tabelle 5: (Ergebnisse der Analysen des Sediments bei zunehmender Anzahl von Waschungen)

| Probe | Anzahl der Waschungen | Proteingehalt | Protein pro 100 g RPK in g | Anteil an gewonnenem Protein |
|---|---|---|---|---|
| 1 | 1 | 54,9 % | 11,21 | 36 % |
| 2 | 2 | 58,7 % | 10,22 | 33 % |
| 3 | 3 | 60,3 % | 9,93 | 32 % |
| 4 | 4 | 62,6 % | 9,74 | 32 % |

**Beispiel 2 (erfindungsgemäß)**

Nachfolgend wird das erfindungsgemäße Verfahren zur Gewinnung von Proteinen aus Rapspresskuchen anhand eines weiteren konkreten Beispiels näher erläutert. Während zuvor ein Beispiel für die Proteingewinnung aus Rapspresskuchen im Labormaßstab angeführt wurde, erfolgten in dem nachfolgenden Beispiel die Zerkleinerung und die weitere Aufarbeitung im Pilotmaßstab. Das Ausgangsprodukt war in Klumpen gepresster Rapspresskuchen. Um weitere physikalische Trennmethoden möglich zu machen, mussten die Klumpen zunächst zerkleinert werden. Dazu wurde im vorliegenden Beispiel eine Hammerschlagmühle mit einem Einsatz mit einer Schlitzdicke von 5 mm verwendet.

Das erhaltene Mehl wies eine Partikelgrößenverteilung auf. 40 kg dieses Mehls wurden in 760 l Wasser bei 45 °C unter ständigem Rühren suspendiert. Nach 30 min wurde diese Suspension über eine Pumpe über ein zweistufiges Vibrationssieb geleitet. Der erhaltene Filterkuchen wurde mittels einer Saftpresse nachgepresst, die ablaufende Lösung mit der restlichen vereint. Insgesamt wurden eine Proteinlösung und ein Filterkuchen erhalten. Die Proteinlösung wurde auf 0 - 1 °C abgekühlt. Nach 14 h wurde diese Lösung mittels eines Tellerseparators (Westfalia-Separator CA 20) getrennt. Das Sediment wurde erneut mit Wasser versetzt und auf 0 °C gekühlt und wie vorab beschrieben zentrifugiert.

**Bezugszeichenliste**

10  Rapspresskuchen
11  Vermahlung
12  Abtrennung der Schalen durch Windsichten
13  innere helle Fraktion
14  abgetrennte Schalen
15  Wasser
16  Suspension
17  Filtration
18  proteinreiche Flüssigkeit
19  schalenreicher Filterkuchen
20  Suspension im Mischtank
21  Filtration
22  proteinreiche Flüssigkeit
23  schalenreicher Filterkuchen
24  zur Proteinextraktion
25  zur weiteren Verwendung, z.B. als Tierfutter
26  Suspension in Mischtank
27  Abtrennung im Zentrifugalfeld
28  proteinreiches Sediment
29  proteinarmer Überstand
30  weitere Suspension
31  Abtrennung
32  proteinarmer Überstand
33  Pfeil
34  proteinreiches Sediment

**Patentansprüche**

**1.** Verfahren zur Gewinnung von Proteinen aus durch Kaltpressung oder gegebenenfalls durch Heißpressung angefallenem Rapspresskuchen, umfassend die nachfolgend genannten Schritte:

- gegebenenfalls Abtrennen von Schalenanteilen aus dem Rapspresskuchen (10);
- Suspendieren des Rapspresskuchens (10) in einer wässrigen Lösung vor oder nach Abtrennung der Schalenanteile;
- Durchmischen dieser ersten Suspension (16) bei erhöhter Temperatur von wenigstens 31 °C, um Proteine in Lösung zu bringen;
- Abtrennen (17) der Schalenanteile aus der Lösung, sofern diese nicht im Vorfeld bereits trocken abgetrennt wurden;
- Abkühlen der Proteinlösung (18, 22) bzw. der Suspension (26) auf eine Temperatur von weniger als 5 °C unter Ausfällung eines ersten proteinreichen Sediments (28);
- Abtrennen (27) des ersten proteinreichen Sediments (28);
- wobei das erste proteinreiche Sediment anschließend erneut mit Wasser (15) versetzt wird zur Herstellung einer weiteren Suspension (30), die weitere Suspension (30) abgekühlt wird auf eine Temperatur von weniger als 5 °C und das dabei erhaltene zweite proteinreiche Sediment (34) abgetrennt wird.

2. Verfahren zur Gewinnung von Proteinen aus Rapspresskuchen nach Anspruch 1, **dadurch gekennzeichnet, dass** das Abtrennen von Schalenanteilen durch Filtration (17) oder in einem Schwerkraft- oder Zentrifugalfeld, insbesondere durch Dekantieren erfolgt.

3. Verfahren zur Gewinnung von Proteinen aus Rapspresskuchen nach Anspruch 1 oder 2, **dadurch gekennzeichnet, dass** das Suspendieren (26) der gereinigten schalenfreien Fraktion mit einer salzfreien wässrigen Lösung (15) erfolgt.

4. Verfahren zur Gewinnung von Proteinen aus Rapspresskuchen nach einem der Ansprüche 1 bis 3, **dadurch gekennzeichnet, dass** das Suspendieren bzw. das Durchmischen der ersten Suspension (16) bei einer Temperatur im Bereich von etwa 31 °C bis etwa 55 °C, insbesondere bei einer Temperatur zwischen etwa 35 °C und etwa 50 °C, besonders bevorzugt bei einer Temperatur im Bereich von etwa 35 °C und etwa 45 °C.

5. Verfahren zur Gewinnung von Proteinen aus Rapspresskuchen nach einem der Ansprüche 1 bis 4, **dadurch gekennzeichnet, dass** die Proteinlösung (18, 22) bzw. die Suspension (26) auf eine Temperatur im Bereich von etwa 4 °C bis etwa 0 °C abgekühlt wird.

6. Verfahren zur Gewinnung von Proteinen aus Rapspresskuchen nach einem der Ansprüche 1 bis 5, **dadurch gekennzeichnet, dass** die erste Suspension (16) einen nativen pH-Wert im Bereich von wenigstens etwa 6,5 - 6,8 aufweist oder durch Zugabe eines alkalischen Mediums auf einen neutralen oder schwach alkalischen pH-Wert im Bereich von etwa 6,5 bis etwa 9 gebracht wird.

7. Verfahren zur Gewinnung von Proteinen aus Rapspresskuchen nach einem der Ansprüche 1 bis 6, **dadurch gekennzeichnet, dass** das Abtrennen (27, 31) des ersten (28) und/oder zweiten proteinreichen Sediments (34) unter Einwirkung eines Zentrifugalfelds erfolgt.

8. Verfahren zur Gewinnung von Proteinen aus Rapspresskuchen nach einem der Ansprüche 1 bis 7, **dadurch gekennzeichnet, dass** eine weitere Aufarbeitung des proteinarmen Überstands (32) nach dem Abtrennen des ersten (28) oder zweiten proteinreichen Sediments (34) vorgesehen ist.

9. Verfahren zur Gewinnung von Proteinen aus Rapspresskuchen nach einem der Ansprüche 1 bis 8, **dadurch gekennzeichnet, dass** das Abtrennen von Schalenanteilen (14) aus dem Rapspresskuchen wenigstens einen Schritt des Zerkleinerns (11) und/oder wenigstens einen darauffolgenden Schritt des Siebens oder Windsichtens (12), vorzugsweise vor dem Suspendieren des Rapspresskuchens umfasst.

10. Verfahren zur Gewinnung von Proteinen aus Rapspresskuchen nach einem der Ansprüche 1 bis 8, **dadurch gekennzeichnet, dass** der Rapspresskuchen (10), gegebenenfalls nach oder unter Zerkleinerung, mit einer wässrigen Lösung (15) suspendiert wird und das Abtrennen von Schalenanteilen (19) nach dem Suspendieren (16) durch Filtration (17) oder in einem Zentrifugalfeld erfolgt.

11. Verfahren zur Gewinnung von Proteinen aus Rapspresskuchen nach einem der Ansprüche 1 bis 10, **dadurch gekennzeichnet, dass** die Bedingungen bei der Herstellung einer weiteren Suspension (30) durch Zugabe von Wasser (15) zu dem ersten proteinreichen Sediment (28) im Vergleich zu den Bedingungen beim ersten Suspendieren (26) des Rapspresskuchens in einer wässrigen Lösung variiert werden, insbesondere hinsichtlich der Zusammensetzung oder des pH-Werts oder der Temperatur des wässrigen Mediums, welches für das Suspendieren verwendet wird und/oder dass die Bedingungen beim Abkühlen der weiteren Suspension (30) im Vergleich zu den Bedingungen beim Abkühlen der ersten Proteinlösung (18, 22) bzw. Suspension (26) variiert werden, insbesondere hinsichtlich der Temperatur, auf die die jeweilige Suspension abgekühlt wird.

**Claims**

1. Method for obtaining proteins from rapeseed press cake obtained by cold pressing or optionally by hot pressing, comprising the following steps:

   optionally separating peel fractions from the rapeseed press cake (10);
   suspending the rapeseed press cake (10) in an aqueous solution before or after separating the peel fractions;
   mixing this first suspension (16) at an elevated temperature of at least 31°C in order to bring proteins into solution;
   separating (17) the peel fractions from the solution, if these have not already been separated dry in advance;
   cooling the protein solution (18, 22) or the suspension (26) to a temperature of less than 5°C with precipitation of a first protein-rich sediment (28);
   separating (27) the first protein-rich sediment (28);
   wherein water (15) is then added again to the first protein-rich sediment to produce a further suspension (30), the further suspension (30) is cooled to a temperature of less than 5°C and the second protein-rich sediment (34) obtained in the process is separated.

2. Method for obtaining proteins from rapeseed press cake according to claim 1, **characterized in that** the peel fractions are separated by filtration (17) or in a gravity or centrifugal field, in particular by decantation.

3. Method for obtaining proteins from rapeseed press cake according to claim 1 or 2, **characterized in that** the suspended (26) of the purified peel-free fraction is carried out with a salt-free aqueous solution (15).

4. Method for obtaining proteins from rapeseed press cake according to one of claims 1 to 3, **characterized in that** the suspension or the mixing of the first suspension (16) is carried out at a temperature in the range from about 31°C to about 55°C, in particular at a temperature between about 35°C and about 50°C, particularly preferably at a temperature in the range from about 35°C and about 45°C.

5. Method for obtaining proteins from rapeseed press cake according to one of claims 1 to 4, **characterized in that** the protein solution (18, 22) or the suspension (26) is cooled to a temperature in the range from about 4°C to about 0°C.

6. Method for obtaining proteins from rapeseed press cake according to one of claims 1 to 5, **characterized in that** the first suspension (16) has a native pH in the range from at least about 6.5-6.8 or is brought to a neutral or weakly alkaline pH in the range from about 6.5 to about 9 by addition of an alkaline medium.

7. Method for obtaining proteins from rapeseed press cake according to one of claims 1 to 6, **characterized in that** the separation (27, 31) of the first (28) and/or second protein-rich sediment (34) is carried out under the action of a centrifugal field.

8. Method for obtaining proteins from rapeseed press cake according to one of claims 1 to 7, **characterized in that** further processing of the protein-poor supernatant (32) is provided after the separation of the first (28) or second protein-rich sediment (34).

9. Method for obtaining proteins from rapeseed press cake according to one of claims 1 to 8, **characterized in that** the separation of shell portions (14) from the rapeseed press cake comprises at least one step of comminution (11) and/or at least one subsequent step of sieving or air sifting (12), preferably before the suspension of the rapeseed press cake.

10. Method for obtaining proteins from rapeseed press cake according to one of claims 1 to 8, **characterized in that** the rapeseed press cake (10), optionally after or with comminution, is suspended with an aqueous solution (15) and the separation of shell portions (19) is carried out after the suspension (16) by filtration (17) or in a centrifugal field.

11. Method for obtaining proteins from rapeseed press cake according to one of claims 1 to 10, **characterized in that** the conditions during the production of a further suspension (30) by addition of water (15) to the first protein-rich sediment (28) are varied in comparison with the conditions during the first suspension (26) of the rapeseed press cake in an aqueous solution, in particular with regard to the composition or the pH or the temperature of the aqueous medium which is used for the suspension and/or **in that** the conditions during the cooling of the further suspension (30) are varied in comparison with the conditions during the cooling of the first protein solution (18, 22) or suspension (26), in particular with regard to the temperature to which the respective suspension is cooled.

**Revendications**

1. Procédé d'obtention de protéines à partir de tourteaux de colza obtenus par pressage à froid ou éventuellement par pressage à chaud, comprenant les étapes suivantes :

   - éventuellement séparation de parties d'enveloppe du tourteau de colza (10) ;
   - mise en suspension du tourteau de colza (10) dans une solution aqueuse avant ou après séparation des parties d'enveloppe ;
   - mélange de cette première suspension (16) à une température élevée d'au moins 31 °C pour mettre les protéines en solution ;
   - séparation (17) des parties d'enveloppe de la solution, dans la mesure où celles-ci n'ont pas déjà été séparées à sec au préalable ;
   - refroidissement de la solution de protéines (18, 22) ou de la suspension (26) à une température inférieure à 5 °C avec précipitation d'un premier sédiment riche en protéines (28) ;
   - séparation (27) du premier sédiment riche en protéines (28) ;
   - le premier sédiment riche en protéines étant ensuite à nouveau mélangé avec de l'eau (15) pour la fabrication d'une suspension supplémentaire (30), la suspension supplémentaire (30) étant refroidie à une température inférieure à 5 °C et le deuxième sédiment riche en protéines (34) ainsi obtenu étant séparé.

2. Procédé d'obtention de protéines à partir de tourteaux de colza selon la revendication 1, **caractérisé en ce que** la séparation de parties d'enveloppe a lieu par filtration (17) ou dans un champ de gravité ou centrifuge, en particulier par décantation.

3. Procédé d'obtention de protéines à partir de tourteaux de colza selon la revendication 1 ou 2, **caractérisé en ce que** la mise en suspension (26) de la fraction purifiée sans enveloppe a lieu avec une solution aqueuse sans sel (15).

4. Procédé d'obtention de protéines à partir de tourteaux de colza selon l'une quelconque des revendications 1 à 3, **caractérisé en ce que** la mise en suspension ou le mélange de la première suspension (16) a lieu à une température dans la plage d'environ 31 °C à environ 55 °C, en particulier à une température entre environ 35 °C et environ 50 °C, de manière particulièrement préférée à une température dans la plage d'environ 35 °C et environ 45 °C.

5. Procédé d'obtention de protéines à partir de tourteaux de colza selon l'une quelconque des revendications 1 à 4, **caractérisé en ce que** la solution de protéines (18, 22) ou la suspension (26) est refroidie à une température dans la plage d'environ 4 °C à environ 0 °C.

6. Procédé d'obtention de protéines à partir de tourteaux de colza selon l'une quelconque des revendications 1 à 5, **caractérisé en ce que** la première suspension (16) présente un pH natif dans la plage d'au moins environ 6,5 - 6,8 ou est amenée par ajout d'un milieu alcalin à un pH neutre ou faiblement alcalin dans la plage d'environ 6,5 à environ 9.

7. Procédé d'obtention de protéines à partir de tourteaux de colza selon l'une quelconque des revendications 1 à 6, **caractérisé en ce que** la séparation (27, 31) du premier (28) et/ou du deuxième sédiment riche en protéines (34) a lieu sous l'action d'un champ centrifuge.

8. Procédé d'obtention de protéines à partir de tourteaux de colza selon l'une quelconque des revendications 1 à 7, **caractérisé en ce qu'**un traitement supplémentaire du surnageant pauvre en protéines (32) est prévu après la séparation du premier (28) ou du deuxième sédiment riche en protéines (34).

9. Procédé d'obtention de protéines à partir de tourteaux de colza selon l'une quelconque des revendications 1 à 8, **caractérisé en ce que** la séparation de parties de coque (14) à partir du tourteau de colza comprend au moins une étape de broyage (11) et/ou au moins une étape suivante de tamisage ou de criblage au vent (12), de préférence avant la mise en suspension du tourteau de colza.

10. Procédé d'obtention de protéines à partir de tourteaux de colza selon l'une quelconque des revendications 1 à 8, **caractérisé en ce que** le tourteau de colza (10), éventuellement après ou avec broyage, est mis en suspension avec une solution aqueuse (15) et la séparation de parties d'enveloppe (19) a lieu après la mise en suspension (16) par filtration (17) ou dans un champ centrifuge.

11. Procédé d'obtention de protéines à partir de tourteaux de colza selon l'une quelconque des revendications 1 à 10, **caractérisé en ce que** les conditions lors de la fabrication d'une suspension supplémentaire (30) par ajout d'eau (15) au premier sédiment riche en protéines (28) sont modifiées par rapport aux conditions lors de la première mise en suspension (26) du tourteau de colza dans une solution aqueuse, en particulier en ce qui concerne la composition ou le pH ou la température du milieu aqueux qui est utilisé pour la mise en suspension et/ou **en ce que** les conditions lors du refroidissement de la suspension supplémentaire (30) sont modifiées par rapport aux conditions lors du refroidissement de la première solution de protéines (18, 22) ou suspension (26), en particulier en ce qui concerne la température à laquelle la suspension respective est refroidie.

<u>Figur 1</u>

Figur 2

Figur 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016115911 B4
- WO 2019048695 A1
- US 9040098 B2
- EP 1389921 B1
- US 20070004909 A1